# EUROPEAN PATENT APPLICATION

(11) **EP 4 087 050 A1**
(43) Date of publication of application: **09.11.2022**
(21) Application number: 20910600.4
(22) Date of filing: 06.08.2020
(51) Int. Cl.: H01M 50/569, H01M 50/572

(54) **INTEGRATED HIGH-TEMPERATURE DECOMPOSABLE CONNECTOR AND LITHIUM ION BATTERY COMPRISING SAME**

(30) Priority: 30.12.2019 CN 201911402338
(71) Applicant: Hefei Gotion High-Tech Power Energy Co., Ltd., Hefei, Anhui 230012 (CN)
(72) Inventor: CHENG, Qian, Hefei, Anhui 230012 (CN); ZHANG, Ya, Hefei, Anhui 230012 (CN); CAI, Steven, Hefei, Anhui 230012 (CN); LI, Chen, Hefei, Anhui 230012 (CN)
(74) Representative: Novagraaf Technologies
(86) International application number: PCT/CN2020/107305
(87) International publication number: WO 2021/135225

(57) **Abstract**

Disclosed are an integrated high-temperature decomposable connector and a lithium ion battery containing the same. The integrated high-temperature decomposable connector includes a connecting plate and supporting columns fixedly arranged on one side of the connecting plate at intervals, clamping columns are fixedly connected to the top ends of the supporting columns, and an insertion recess is formed between adjacent clamping columns; the top end surface of the clamping column and the inner sidewall of the insertion recess are each provided with a conductive layer, the clamping column is made of a high-temperature decomposable material, and the high-temperature decomposable material is formed by mixing a thermosensitive resin and a functional additive. The connector according to the present disclosure is composed of two parts, the high-temperature decomposable thermosensitive resin and the electrically conductive layer. The conductive layer may be electrically connected to cell tabs, and the thermosensitive resin may be automatically decomposed while the temperature of cells is too high, so that the conductive layer on the surface layer collapses, an electric connection effect is not yielded, further thermal runaway of the cells may be prevented, and the safety performance of the battery is greatly improved.

## Description

### Technical Field

The present disclosure relates to the technical field of lithium ion batteries, in particular to an integrated high-temperature decomposable connector and a lithium ion battery comprising the same.

### Background

In the past two decades, lithium ion batteries become a most important power source for new energy vehicles. In order to make it widely available, it is necessary to further reduce the cost of the lithium ion batteries while the performance thereof is improved. In addition, in order to improve the driving mileage of electric vehicles, the industry still pursues the higher energy density of the lithium ion batteries continuously.

In the design of battery packs and modules, the design of fuses for electrical connection between cells is always a difficulty. If a problem occurs in a single cell, for example, a micro-short circuit, if the electrical connection with the cell may be cut off in time, the cell may be prevented from producing thermal runaway further. However, existing current fuses have problems such as low reliability, it is easy to fuse accidently while fast charging occurs; high cost, so a large number of the fuses need to be installed; and complex structure.

In addition, in terms of preventing the thermal runaway, a square cell may conduct a hot airflow of the single cell by the design of an explosion-proof valve and an airflow channel, and prevent heat transfer between the cells by a thermal insulation material between the cells. The thermal diffusion between the square cells may be controlled to a certain extent. Compared with the square cell, a soft-packed cell has a more free shape design, but after the thermal runaway of the single cell, it is difficult to use a design similar to the explosion-proof valve of the square cell to conduct heat, because the location in which the soft-packed cell is broken is random, and the heat generated may cause the thermal runaway of the surrounding cells one after another. Therefore, the thermal runaway control of soft-packed modules is a difficulty of the existing module design.

### Summary

One purpose of the present disclosure is to provide an integrated high-temperature decomposable connector.

Another purpose of the present disclosure is to provide a preparation method for the integrated high-temperature decomposable connector.

Another purpose of the present disclosure is to provide a lithium ion battery containing the connector.

In order to achieve the above purposes, the present disclosure provides the following technical schemes.

The present disclosure provides an integrated high-temperature decomposable, herein materials of clamping columns include a high-temperature decomposable material (the clamping column is partially or entirely made of the high-temperature decomposable material), it may be decomposed to disconnect electrical connection between cells while a short circuit occurs in the cells, thermal runaway is prevented from occurring, and the safety performance of the battery is greatly improved.

Specifically, on the one hand, the present disclosure provides an integrated high-temperature decomposable connector, including a connecting plate and supporting columns fixedly arranged on one side of the connecting plate at intervals, clamping columns are fixedly connected to the top ends of the supporting columns, and an insertion recess is formed between adjacent clamping columns; the top end surface of the clamping column and the inner sidewall of the insertion recess are each provided with a conductive layer, materials of the clamping columns include a high-temperature decomposable material (the clamping column is partially or entirely made of the high-temperature decomposable material), and the high-temperature decomposable material is formed by mixing a thermosensitive resin and a functional additive.

In a further scheme, the decomposition temperature of the high-temperature decomposable material is 150°C-250°C, the mass percentage of the thermosensitive resin in the high-temperature decomposable material is 70%-95%, and the functional additive is the rest.

In a further scheme, the thermosensitive resin is a polycarbonate compound; and the functional additive is a mixture of at least one of a carbon material and a glass fiber and a catalyst.

Preferably, the polycarbonate compound is one or more of a polycarbonate, a polyethylene carbonate or a polypropylene carbonate (PPC); or any one or a combination of two or more of a polymethyl carbonate, a polyethyl carbonate and PPC modified with a functional group, herein the functional group may be a hydroxyl, a carboxyl, a formyl, an amino group, a sulfonic acid group and the like and a combination of groups.

In a further scheme, the catalyst is at least one of an inorganic compound or a polycarbonate modified with a functional group.

Preferably, the inorganic compound may be one or more of a hydrochloride, a sulfate, a potassium hydroxide, a sodium carbonate, a potassium carbonate, a calcium carbonate, a lithium carbonate, an ammonium carbonate or a sodium bicarbonate; and the polycarbonate modified with the functional group is a polycarbonate modified by a hydroxyl, a carboxyl, a formyl, an amino group, a sulfonic acid group, a glycidyl or a combination thereof. The catalyst may greatly reduce the thermal decomposition temperature of the thermosensitive resin, so that it generates the thermal decomposition at a lower temperature. Namely the thermosensitive resin of the present disclosure reduces its decomposition temperature by the catalyst, so that the decomposition temperature may be adjusted between 150-400°C. By modifying a molecular chain of the thermosensitive resin, especially adding the glycidyl-modified polycarbonate, or importing the carboxyl and the hydroxyl on a main chain of the carbonate, its decomposition temperature may be reduced from 200°C-250°C to about 150°C.

In a further scheme, the carbon material may be selected from one or a combination of two or more of a carbon black, a ketjen black, a carbon nanotube, a graphene, a carbon fiber, and a vapor-grown carbon fiber (VGCF). At a normal temperature, the thermosensitive resin is fully mixed with the carbon material or the glass fiber, so that it has the sufficient mechanical strength and thermal conductivity. At a high-temperature (such as above 180°C), the decomposition temperature of the thermosensitive resin is reached, and it is decomposed into carbon dioxide and water, the volume of the clamping column becomes smaller, the conductive layer structure on the surface thereof collapses, and a cell tab is separated from it to disconnect a circuit between the cells, so the occurrence of the thermal runaway is prevented.

Preferably, the size of the graphene is 5 nm-200 µm; the size of the carbon black and the ketjen black is 1 nm-100 nm; the carbon nanotube is a single-wall carbon nanotube or a multi-wall carbon nanotube, and its diameter is 1 nm-50 nm, the length is 10 nm-1 mm; the diameter of the carbon fiber and VGCF is 80 nm-8 µm, Brunauer-Emmett-Teller (BET) is 5 m²/g-1000 m²/g, the length is 200 nm-1 mm; and the diameter of the glass fiber is 500 nm-50 µm.

In a further scheme, the thickness of the conductive layer is 300 nm-1 mm, and its material is copper, aluminum, tin, gold, silver, platinum or an alloy therebetween; and the conductive layer is formed by chemical plating, evaporating, magnetron sputtering or screen printing methods.

In a further scheme, the cross section of the clamping column is a trapezoidal structure with a large upper part and a small lower part, an accommodating groove is formed between the adjacent supporting columns, and the volume of the accommodating groove is larger than that of the insertion recess.

In a further scheme, according to the preparation method for the high-temperature decomposable material, the thermosensitive resin with a mass percentage of 70%-95% is heated to a molten state, and the functional additive with a mass percentage of 5%-30% is added to stir fully, herein the functional additive is the mixture of at least one of the carbon material and the glass fiber and the catalyst.

Herein the clamping columns, the supporting columns and the connecting plate may be integrally formed, namely the above mixture is poured into a mold, and cured at a room temperature to form the whole connector; or it is formed by splicing after being formed respectively, herein the material of the clamping column is obtained by fully stirring the thermosensitive resin and the functional additive with the mass percentage of 5%-30%, and the materials of the supporting column and the connecting plate are made of high thermal conductivity insulating materials, such as one or more of Al₂O₃, AIN, BeO, Si₃N₄, SiC, polyacetylene, polyaniline, and polypyrrole; or a mixture of one or more of polyamide, polyphenylene sulfide and polyethylene terephthalate and one or more of metal oxide, graphite fiber, and carbon fiber.

Another purpose of the present disclosure is to provide a lithium ion battery, it contains the above integrated high-temperature decomposable connector, and the insertion recess is in an interference fit with a cell tab.

The connector in the present disclosure is mainly used to connect each cell, the cell tab is inserted into the insertion recess in the connector, and they are in interference fit; and the top end face of the clamping column and the inner sidewall of the insertion recess are each provided with a conductive layer, thereby a circuit of each cell is communicated. Since the clamping column is made of the high-temperature decomposable material formed by mixing the thermosensitive resin and the functional additive, herein a function of the thermosensitive resin is that while an accident such as an internal short circuit occurs in a single cell, it is decomposed while being heated to a certain temperature, and then the conductive layer on its surface collapses, thereby the connection between the cells is disconnected, so that the entire module does not generate the thermal runaway. Herein a function of the functional additive is to improve the electrical conductivity of the thermosensitive resin, reduce the thermal decomposition temperature of the thermosensitive resin, and improve its mechanical performance at the same time. Therefore, the clamping column prepared by the present disclosure has good thermal conductivity and mechanical strength at the normal temperature. While being heated to a certain temperature, it is decomposed by heat, so that the connection between the cells may be disconnected, the occurrence of the thermal runaway may be prevented, and the safety of the battery is greatly improved.

Because the traditional electric connection of the cells usually adopts a laser welding process, there are many welding points, the process is complicated, the pollution of metal impurities such as a metal splash may be generated, and it is difficult to repair and replace the cells after being welded. The present disclosure adopts the connector-type current collector connection, so it may greatly reduce the complexity of the process, and improve the reliability, and is very easy to repair.

The connector of the present disclosure is composed of two parts, the thermosensitive resin decomposed at the high-temperature and the electrically conductive layer. Herein the conductive layer may be electrically connected with the cell tab, and the thermosensitive resin may be automatically decomposed while the temperature of the cells is too high, so that the conductive layer on the surface layer collapses without generating the electrical connection effect. In this way, the cells may be prevented from generating the thermal runaway further.

Even if the cells or modules generate the thermal runaway, the high temperature generated may completely vaporize the high-temperature decomposable thermosensitive resin. A hot gas generated by the thermal runaway of the cells may overflow in time through the accommodating groove and the insertion recess, to avoid the occurrence of heat accumulation; and in addition, cooperated with the design of the thermal insulation material between the modules or water-cooling plates arranged longitudinally, the thermal runaway between the modules or between cavities may be prevented from occurring.

In addition, a slave machine of a battery management system (BMS) in the battery module used to measure signals such as the voltage and the temperature of each cell of the module may be directly attached to a backplane made of the high thermal conductivity insulating material, so that the heat dissipation of the module may be used to share with the slave machine of BMS. In this way, a larger equalizing current may be achieved.

### Brief Description of the Drawings

Fig. 1 is a structure schematic diagram of a connector in the present disclosure.
Fig. 2 is a schematic diagram of a state before the connector of the present disclosure is connected with a cell.
Fig. 3 is a schematic diagram of a state after the connector of the present disclosure is connected with a cell.

### Detailed Description of the Embodiments

Technical schemes in embodiments of the present disclosure are clearly and completely described below in combination with the drawings in the embodiments of the present disclosure. Apparently, the described embodiments are only a part of the embodiments of the present disclosure, but not all of the embodiments. Based on the embodiments of the present disclosure, all other embodiments obtained by those of ordinary skill in the art without creative work shall fall within a scope of protection of the present disclosure.

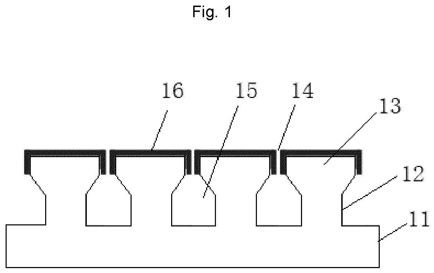

As shown in Fig. 1, an integrated high-temperature decomposable connector, including a connecting plate 11 and supporting columns 12 fixedly arranged on one side of the connecting plate 11 at intervals, clamping columns 13 are fixedly connected to the top ends of the supporting columns 12, and an insertion recess 14 is formed between adjacent clamping columns 13; the top end surface of the clamping column 13 and the inner sidewall of the insertion recess 14 are each provided with a conductive layer 16; and materials of the clamping columns 13 include a high-temperature decomposable material (the clamping column is partially or entirely made of the high-temperature decomposable material), and the high-temperature decomposable material is formed by mixing a thermosensitive resin and a functional additive.

The cross section of the clamping column 13 is a trapezoidal structure with a large upper part and a small lower part, and an accommodating groove 15 is formed between adjacent supporting columns 12, herein the insertion recess 14 is smaller in volume, and is in interference fit with the cell tab 2 and is used for inserting and connecting the cell tab 2. The volume of the accommodating groove 15 is greater than that of the insertion recess 14, and a hot gas generated by the thermal runaway of the cells may overflow in time through the accommodating groove and the insertion recess.

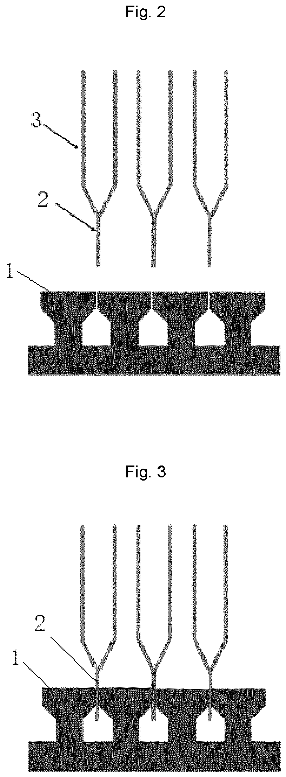

As shown in Fig. 2 and Fig. 3, the cell tab 2 of the cell 3 is inserted into the insertion recess 14 in the connector 1, its bottom end is located in the accommodating groove 15, and the cell tab 2 is in interference fit with the insertion recess 14. Since the top end surface of the clamping column 13 and the inner sidewall of the insertion recess 14 are each provided with a conductive layer 16, so that a circuit of each cell 3 is conducted. While a certain cell is short-circuited, the high temperature generated by it is transmitted to the clamping column 13 through the conductive layer 16, and while the temperature reaches 150°C-250°C, the thermosensitive resin may be decomposed into carbon dioxide and water, the volume of the clamping column 13 becomes smaller, and the structure of the conductive layer 16 on the surface thereof collapses, so the cell tab 2 is separated from the conductive layer 16 to disconnect the circuit between the cells, and the occurrence of the thermal runaway is prevented.

In the present disclosure, the decomposition temperature of the high-temperature decomposable material is 150°C-250°C, herein the mass percentage of the thermosensitive resin is 70%-95%, and the functional additive is the rest; and the thermosensitive resin is a polycarbonate compound or a polycarbonate compound modified with a functional group.

Herein the polycarbonate compound is a polycarbonate, a polyethylene carbonate or a polypropylene carbonate; the functional group is a hydroxyl, a carboxyl, a formyl, an amino group, a sulfonic acid group or a combination thereof; and the functional additive is a carbon material or a glass fiber.

In a further scheme, the carbon material is selected from one or a combination of two or more of a carbon black, a ketjen black, a carbon nanotube, a graphene, a carbon fiber, and VGCF.

Preferably, the size of the graphene is 5 nm-200 µm; the size of the carbon black and the ketjen black is 1 nm-100 nm; the carbon nanotube is a single-wall carbon nanotube or a multi-wall carbon nanotube, and its diameter is 1 nm-50 nm, the length is 10 nm-1 mm; the diameter of the carbon fiber and VGCF is 80 nm-8 µm, BET is 5 m²/g-1000 m²/g, the length is 200 nm-1 mm; and the diameter of the glass fiber is 500 nm-50 µm.

In a further scheme, the thickness of the conductive layer 16 is 300 nm-1 mm, and its material is copper, aluminum, tin, gold, silver, platinum or an alloy therebetween; and the conductive layer 16 is formed by chemical plating, evaporating, magnetron sputtering or screen printing methods.

In order to verify the decomposition start temperature, compressive strength and hardness of the clamping columns made of the high-temperature decomposable materials with different components, it is specifically tested, and shown in detail in Embodiments 1-4. In the following embodiments, % represents a mass percentage.

### Contrast example 1

100% of a polypropylene carbonate (25511-85-7, Sigma-Aldrich) is used to prepare a cube sample with a size of 30 mm.

### Embodiment 1

85% of a polyethylene carbonate, 10% of a potassium hydroxide and 5% of an acetylene black (30 nm) are used to prepare a cube sample with a size of 30 mm.

### Embodiment 2

85% of a polypropylene carbonate, 10% of a potassium hydroxide and 5% of a carbon fiber (250 nm in diameter, and 2 µm in length) are used to prepare a cube sample with a size of 30 mm.

### Embodiment 3

80% of a polypropylene carbonate (25511-85-7, Sigma-Aldrich) and 15% of a sodium sulfate (Sigma-Aldrich) and 5% of graphene and carbon nanotube (the size of the graphene is 2 µm, there are about 8 layers in average, the carbon nanotube is a multi-wall carbon nanotube, 20 nm in diameter and 400 nm in length) are used to prepare a cube sample with a size of 30 mm.

### Embodiment 4

90% of a polycarbonate and 5% of a sodium sulfate (Sigma-Aldrich) and 5% of a glass fiber (1 µm in diameter, and 100 µm in length) are used to prepare a cube sample with a size of 30 mm.

The decomposition initiation temperature, compressive strength and Shore hardness of the samples prepared in the above Contract example 1 and Embodiments 1-4 are respectively detected, herein: a test method of thermogravimetry (TG) is based on JIS K 7121-1987, herein the corresponding temperature while the weight change is higher than 7.1% is considered to be the decomposition start temperature;
the determination of compressive strength is based on a test method of JIS K 7208, and the compressive strength is tested by a universal testing machine MCT-1150; and
a hardness test is performed according to JIS B7727 by using a model D of Nakai Seiki Co., Ltd.

Results of specific experiments are shown in Table 1 below:

**Table 1: Embodiment comparison**

| | Decomposition start temperature | Compressive strength |
|---|---|---|
| Contrast example 1 | 300°C | 20Mpa |
| Embodiment 1 | 183°C | 90Mpa |
| Embodiment 2 | 208°C | 120Mpa |
| Embodiment 3 | 230°C | 135Mpa |
| Embodiment 4 | 210°C | 137Mpa |

By adding a certain proportion of a catalyst, the decomposition temperature of the thermosensitive resin may be reduced from the original 300 degrees to about 200 degrees, and the decomposition temperature thereof may be precisely controlled by controlling substances and amounts added. In this way, the time that the electrical connection between the cells is disconnected may be precisely controlled. In addition, by adding the carbon material or the glass fiber, the compressive strength and surface hardness of the material may be significantly improved, so that it adapts to use requirements.

In order to detect the thermal runaway time of a battery module caused by thermal decomposition material layers with different components, Contrast example 2 and Embodiments 5-7 are specially compared. For the convenience of comparison, all the thermosensitive resins in Embodiments 5-8 use a polypropylene carbonate, other polycarbonates, a polyethylene carbonate and the like are applicable, and it is not described in detail here.

### Contrast example 2

The structure of the connector 1 is shown in Fig. 1, including a connecting plate 11 and supporting columns 12 fixedly arranged on one side of the connecting plate 11 at intervals, clamping columns 13 are fixedly connected to the top ends of the supporting columns 12, and an insertion recess 14 is formed between adjacent clamping columns 13; the top end surface of the clamping column 13 and the inner sidewall of the insertion recess 14 are each provided with a conductive layer 16, and the material of the conductive layer 16 is copper; and the cross section of the clamping column 13 is a trapezoidal structure with a large upper part and a small lower part, and the insertion recess 14 is in interference fit with a cell tab 2 and used for inserting and connecting the cell tab 2.

The material of all components of the connector 1 is made of 100% of a polytetrafluoroethylene.

A module consists of 24 soft-packed cells, the size of the cell is 536*102*8.5 mm, the capacity of each cell is 55 Ah, the cell is graphite/LiFePO₄(LFP), and the energy density of a single cell is 185 Wh/kg and 379 Wh/L. A connection mode of the module is 2P12S, and the specific connection mode is shown in Figs. 2 and 3. The cell tab 2 of the cell 3 is inserted into the insertion recess 14 in the connector 1, and the cell tab 2 is in interference fit with the insertion recess 14, so that a circuit of each cell is conducted.

An experimental method is to overcharge a single cell SOC150 and observe the time for thermal runaway of the entire battery module, and it is specifically shown in Table 2.

### Embodiment 5

It is the same as Contrast example 2, an only difference is that the material of the supporting column 12 and the connecting plate 11 in the connector 1 is a high thermal conductivity insulating material formed by mixing 80% of a polyethylene terephthalate and 20% of an aluminum oxide nanoparticle (50 nm in diameter) and pouring.

The clamping column 13 in the connector 1 is composed of 85% of a polypropylene carbonate, 10% of a potassium hydroxide, and 5% of a carbon fiber (200 nm in diameter and 1 µm in length), namely the polypropylene carbonate is firstly heated to a molten state, and the potassium hydroxide and the carbon fiber are added to stir and mix, then it is poured into a mold and solidified at a room temperature. Then, the top end surface of the clamping column 13 and the inner sidewall of the insertion recess 14 are compounded with conductive copper glue with a thickness of 100 µm as the conductive layer 16 by using a screen printing mode. Finally, it is spliced into the connector 1.

### Embodiment 6

It is the same as Embodiment 5, and an only difference is that the clamping column 13 in the connector 1 is composed of 85% of a polypropylene carbonate, 10% of a potassium carbonate, 3% of a graphene (the size is 2 µm, and there are about 8 layers in average), and 2% of a multi-wall carbon nanotube (30 nm in diameter, and 800 nm in length), namely the polypropylene carbonate is firstly heated to a molten state, and the potassium carbonate, the graphene and the multi-wall carbon nanotube are added to stir and mix, then it is poured into a mold and formed by curing at a room temperature. Then, the top end surface of the clamping column and the inner sidewall of the insertion recess are compounded with 2 µm of silver as the conductive layer 16 by using a surface magnetron sputtering mode.

### Embodiment 7

It is the same as Embodiment 5, and an only difference is that the clamping column 13 in the connector 1 is composed of 85% of a polypropylene carbonate, 10% of a potassium carbonate, 3% of a graphene (the size is 2 µm, and there are about 8 layers in average), and 2% of a glass fiber (1 µm in diameter, and 8 µm in length), namely the polypropylene carbonate is firstly heated to a molten state, and the potassium carbonate, the graphene and the glass fiber are added to stir and mix, then it is poured into a mold and formed by curing at a room temperature. Then, the top end surface of the clamping column and the inner sidewall of the insertion recess are compounded with 10 µm of aluminum as the conductive layer 16 by using a surface magnetron sputtering mode.

### Contrast example 3

A module consists of 24 soft-packed cells, the size of the cell is 536*102*8.5 mm, the capacity of each cell is 74 Ah, the cell is graphite/NCM811, and the energy density of a single cell is 250 Wh/kg and 580 Wh/L. A connection mode of the module is 2P12S, and the specific connection mode is the same as Contrast example 2, and the material of all components of the connector 1 is made of 100% of a polytetrafluoroethylene. An experimental method is to overcharge a single cell SOC150 and observe the time for thermal runaway of the entire battery module.

### Embodiment 8

It is the same as Contrast example 3, and an only difference is that the material of the supporting column 12 and the connecting plate 11 in the connector 1 is a high thermal conductivity insulating material formed by mixing 80% of a polyethylene terephthalate and 20% of an aluminum oxide nanoparticle (50 nm in diameter) and pouring. The clamping column 13 in the connector 1 is composed of 85% of a polypropylene carbonate, 10% of a potassium carbonate, 3% of a graphene (the size is 2 µm, and there are about 8 layers in average), and 2% of a glass fiber (1 µm in diameter, and 8 µm in length)), namely the polypropylene carbonate is firstly heated to a molten state, and the potassium carbonate, the graphene and the glass fiber are added to stir and mix, then it is poured into a mold and formed by curing at a room temperature. Then, the top end surface of the clamping column and the inner sidewall of the insertion recess are compounded with 5 µm of aluminum as the conductive layer 16 by using a surface magnetron sputtering mode. Finally, it is spliced into the connector 1.

**Table 2:**

| | Thermal runaway time of entire module |
|---|---|
| Contrast example 2 | 5min20s |
| Embodiment 5 | 30min10s |
| Embodiment 6 | No thermal diffusion |
| Embodiment 7 | No thermal diffusion |
| Contrast example 3 | 3min00 |
| Embodiment 8 | 35min45s |

Since the functional additive (catalyst + carbon material and/or glass fiber) is added to the connector in Embodiments 5-8 or the clamping column raw material in the connector, the thermal runaway time of the entire module is prolonged, and the safety is improved.

It is found by comparing Contrast example 2 and Embodiments 5-7 that, because the functional additive with the mass percentage of 15% is added to the resin in Embodiments 5-7, the thermal runaway time is significantly prolonged, and the thermal diffusion does occur in Embodiments 6-7.

By comparing Contrast example 3 and Embodiment 8, on the battery module with the higher energy density, the functional additive is added in Embodiment 8, and the time for thermal runaway is also greatly prolonged.

This is because the clamping column 13 in the connector 1 is made of a high-temperature decomposable material, and the high-temperature decomposable material is formed by mixing the thermosensitive resin and the functional additive. While being connected, the cell tab 2 of the cell 3 is inserted into the insertion recess 14 in the connector 1, and the cell tab 2 is in interference fit with the insertion recess 14, so that a circuit of each cell is conducted. While a certain cell is short-circuited, the high temperature generated by it is transmitted to the clamping column 13 through the conductive layer 16, and while the temperature reaches 150°C-250°C, the thermosensitive resin may be decomposed into carbon dioxide and water, the volume of the clamping column 13 becomes smaller, and the structure of the conductive layer 16 on the surface thereof collapses, so the cell tab 2 is separated from the conductive layer 16 to disconnect the circuit between the cells, and the occurrence of the thermal runaway is prevented.

From the above description, the battery module using the connector of the present disclosure may be disconnected in time under the same circumstance, to avoid the thermal runaway of the overall module. On the high-energy-density cell using NCM811, the time for thermal runaway of the module may also be significantly prolonged. If the module composed of the high-temperature decomposable connector of the present disclosure is not used, while the cell is overcharged and a short circuit occurs, the connection between the cells may not be disconnected in time, and the entire module is affected.

Although this description is described according to the embodiments, not every embodiment only includes an independent technical scheme. This description mode in the description is only for clarity. Those skilled in the art should take the description as a whole, and the technical schemes in each embodiment may also be appropriately combined, to form other embodiments that may be understood by those skilled in the art.

Therefore, the above are only preferred embodiments of the present disclosure, and are not intended to limit a scope of implementation of the present disclosure, namely all equivalent transformations made according to the present disclosure are within a scope of protection of the present disclosure.

## Claims

1. An integrated high-temperature decomposable connector, comprising a connecting plate (11) and supporting columns (12) fixedly arranged on one side of the connecting plate (11) at intervals, clamping columns (13) are fixedly connected to the top ends of the supporting columns (12), and an insertion recess (14) is formed between adjacent clamping columns (13); the top end surface of the clamping column (13) and the inner sidewall of the insertion recess (14) are each provided with a conductive layer (16), materials of the clamping columns (13) comprise a high-temperature decomposable material, and the high-temperature decomposable material is formed by mixing a thermosensitive resin and a functional additive.

2. The integrated high-temperature decomposable connector according to claim 1, wherein the decomposition temperature of the high-temperature decomposable material is 150°C-250°C, the mass percentage of the thermosensitive resin in the high-temperature decomposable material is 70%-95%, and the functional additive is the rest.

3. The integrated high-temperature decomposable connector according to claim 1, wherein the thermosensitive resin is a polycarbonate compound; and the functional additive is a mixture of at least one of a carbon material and a glass fiber and a catalyst.

4. The integrated high-temperature decomposable connector according to claim 3, wherein the polycarbonate compound is one or more of a polycarbonate, a polyethylene carbonate, a polypropylene carbonate, a polymethyl carbonate modified with a functional group, a polyethyl carbonate modified with a functional group or PPC modified with a functional group, wherein the functional group comprises one or a combination of two or more of a hydroxyl, a carboxyl, a formyl, an amino group, and a sulfonic acid group;
the catalyst is at least one of an inorganic compound or a polycarbonate modified with a functional group; and
the carbon material is selected from one or a combination of two or more of a carbon black, a Ketjen black, a carbon nanotube, a graphene, a carbon fiber, and VGCF.

5. The integrated high-temperature decomposable connector according to claim 4, wherein the inorganic compound is a hydrochloride, a sulfate, a potassium hydroxide, a sodium carbonate, a potassium carbonate, a calcium carbonate, a lithium carbonate, an ammonium carbonate or a sodium bicarbonate; and
the polycarbonate modified with the functional group is a polycarbonate modified by a hydroxyl,
a carboxyl, a formyl, an amino group, a sulfonic acid group, a glycidyl or a combination thereof.

6. The integrated high-temperature decomposable connector according to claim 4, wherein the size of the graphene is 5 nm-200 µm; the size of the carbon black and the ketjen black is 1 nm-100 nm; the carbon nanotube is a single-wall carbon nanotube or a multi-wall carbon nanotube, and its diameter is 1 nm-50 nm, the length is 10 nm-1 mm; the diameter of the carbon fiber and VGCF is 80 nm-8 µm, BET is 5 m²/g-1000 m²/g, the length is 200 nm-1 mm; and the diameter of the glass fiber is 500 nm-50 µm.

7. The integrated high-temperature decomposable connector according to claim 1, wherein the thickness of the conductive layer (16) is 300 nm-1 mm and its material is copper, aluminum, tin, gold, silver, platinum or an alloy; and the conductive layer (16) is formed by chemical plating, evaporating, magnetron sputtering or screen printing methods.

8. The integrated high-temperature decomposable connector according to claim 1, wherein the cross section of the clamping column (13) is a trapezoidal structure with a large upper part and a small lower part, an accommodating groove (15) is formed between the adjacent supporting columns (12).

9. The integrated high-temperature decomposable connector according to claim 1, wherein the high-temperature decomposable material is formed according to the following preparation method: the thermosensitive resin with a mass percentage of 70%-95% is heated to a molten state, and the rest of the functional additive is added to stir fully.

10. A lithium ion battery, comprising the integrated high-temperature decomposable connector according to any one of claims 1-9, wherein the insertion recess (14) is in interference fit with a cell tab (2).
